# EUROPÄISCHE PATENTSCHRIFT

(11) **EP 4 037 857 B1**
(45) Veröffentlichungstag und Bekanntmachung des Hinweises auf die Patenterteilung: **18.10.2023**
(21) Anmeldenummer: 20775590.1
(22) Anmeldetag: 14.09.2020
(51) Int. Cl.: B23B 31/00, B23Q 17/00

(54) **WERKZEUGAUFNAHME MIT EINEM ELEKTRONISCHEN CHIP**
TOOL HOLDER HAVING AN ELECTRONIC CHIP
PORTE-OUTIL DOTÉ D'UNE PUCE ÉLECTRONIQUE

(30) Priorität: 02.10.2019 DE 102019126599
(43) Veröffentlichungstag der Anmeldung: 10.08.2022
(73) Patentinhaber: Karl Schüssler GmbH & Co. KG, 72411 Bodelshausen (DE)
(72) Erfinder: SCHÜSSLER, Klaus, 72379 Hechingen-Sickingen (DE)
(74) Vertreter: v. Bezold & Partner Patentanwälte - PartG mbB
(86) Internationale Anmeldenummer: PCT/EP2020/075586
(87) Internationale Veröffentlichungsnummer: WO 2021/063656

(56) Entgegenhaltungen:
- EP-A1- 3 050 654
- EP-A2- 1 243 946
- DE-A1-102016 102 692
- DE-U1-202010 012 344
- US-A1- 2013 057 387

## Beschreibung

Die Erfindung betrifft eine Werkzeugaufnahme zur Montage eines Werkzeugs (z. B. Fräser) in einer Werkzeugmaschine (z. B. Fräsmaschine).

Derartige Werkzeugaufnahmen sind unter anderem in der technischen Norm DIN 69893 genormt und beispielsweise in DE 20 2010 012 344 U1 und DE 20 2006 002 269 U1 beschrieben. Diese beiden Veröffentlichungen offenbaren auch einen Einbauraum für einen Datenträger, wie er auch in der technischen Norm DIN 69873 genormt ist. In diesem Einbauraum kann ein elektronischer Chip (z.B. RFID-Tag) montiert werden, der eine Identifikation der Werkzeugaufnahme ermöglicht, was insbesondere im Rahmen des sogenannten Konzepts "Industrie 4.0" vorteilhaft ist.

Problematisch an solchen bekannten Werkzeugaufnahmen mit einem eingebauten elektronischen Chip ist die Tatsache, dass der Chip im Betrieb einer Zentrifugalkraft ausgesetzt ist und im Extremfall aufgrund der Zentrifugalkraft aus dem Einbauraum herausgeschleudert werden kann, was unbedingt verhindert werden muss.

Zur Lösung dieses Problems ist aus DE 10 2016 102 692 A1 eine Werkzeugaufnahme bekannt, bei der der Chip mittels einer Aufnahmehülse formschlüssig in dem Aufnahmeraum (Aufnahmemulde) der Werkzeugaufnahme fixiert ist. Die Aufnahmehülse enthält hierbei den Chip und greift mit einer ringförmig umlaufenden Rastnase in eine Ringnut am Boden des Aufnahmeraums ein, wodurch die Aufnahmehülse mit dem Chip formschlüssig in dem Einbauraum (Aufnahmemulde) fixiert wird.

Problematisch an dieser technischen Lösung ist die Tatsache, dass die zusätzliche Aufnahmehülse radialen Bauraum in dem Aufnahmeraum für den Chip benötigt. Es ist deshalb mit dieser technischen Lösung nicht mehr möglich, Chips mit einem normgemäßen Außendurchmesser gemäß DIN EN 68973 in einem Aufnahmeraum mit einem normgemäßen Innendurchmesser gemäß DIN EN 30 68973 unterzubringen. Vielmehr ist es erforderlich, den Chip zu verkleinern und/oder den Aufnahmeraum zu vergrößern. Darüber hinaus benötigt diese technische Lösung ein zusätzliches Bauteil in Form der Aufnahmehülse für den Chip.

Zum technischen Hintergrund der Erfindung ist auch hinzuweisen auf US 2013/057387 A1.

Der Erfindung liegt deshalb die Aufgabe zugrunde, eine entsprechend verbesserte Werkzeugaufnahme zu schaffen.

Diese Aufgabe wird durch eine erfindungsgemäße Werkzeugaufnahme gemäß dem Hauptanspruch gelöst.

Die erfindungsgemäße Werkzeugaufnahme dient zur Montage eines Werkzeugs in einer Werkzeugmaschine. Die Erfindung ist jedoch hinsichtlich des Typs des Werkzeugs nicht auf die vorstehend exemplarisch erwähnten Fräser beschränkt. Vielmehr kann das Werkzeug auch einem anderen Werkzeugtyp angehören. Beispielsweise kann es sich bei dem Werkzeug um einen Bohrer handeln. Dementsprechend ist die Erfindung auch hinsichtlich des Typs der Werkzeugmaschine nicht auf die eingangs exemplarisch erwähnten Fräsmaschinen beschränkt. Beispielsweise kann es sich bei der Werkzeugmaschine auch um eine Bohrmaschine handeln.

Die erfindungsgemäße Werkzeugaufnahme stimmt teilweise mit den eingangs beschriebenen bekannten Werkzeugaufnahmen überein, wie sie auch in der technischen Norm DIN 69893 sowie in den vorstehend erwähnten Veröffentlichungen DE 20 2010 012 344 U1, welche die Basis für die Präambel des Anspruchs 1 bildet, und DE 20 2006 002 269 U1 beschrieben sind.

So weist auch die erfindungsgemäße Werkzeugaufnahme ein Spannfutter auf, um ein Werkzeug in dem Spannfutter einzuspannen. Beispielsweise kann es sich bei diesem Spannfutter um ein Schrumpffutter handeln, wie es an sich aus dem Stand der Technik bekannt ist.

Darüber hinaus weist die erfindungsgemäße Werkzeugaufnahme in Übereinstimmung mit dem Stand der Technik ebenfalls eine Montageschnittstelle auf, um die Werkzeugaufnahme lösbar an einer Werkzeugmaschine zu montieren.

Vorzugsweise ist diese Montageschnittstelle eine Spindelschnittstelle, die dazu dient, die Werkzeugaufnahme an einer drehbaren Spindel der Werkzeugmaschine (z.B. Fräsmaschine) zu montieren.

In einem bevorzugten Ausführungsbeispiel der Erfindung weist die Spindelschnittstelle einen Hohlschaftkegel auf, wie er beispielsweise in der technischen Norm DIN 69893 genormt ist. Die Erfindung ist jedoch hinsichtlich des Typs der Spindelschnittstelle nicht auf normgemäße Hohlschaftkegel beschränkt, sondern grundsätzlich auch mit anderen Typen von Spindelschnittstellen realisierbar.

Es besteht jedoch alternativ auch die Möglichkeit, dass die Montageschnittstelle dazu dient, die Werkzeugaufnahme an einem Werkzeugrevolver einer Drehmaschine zu montieren, wie es beispielsweise aus der technischen Norm DIN 10889 bekannt ist.

Weiterhin enthält die erfindungsgemäße Werkzeugaufnahme in Übereinstimmung mit den bekannten Werkzeugaufnahmen eine radial von außen zugängliche Aufnahmemulde auf, in der ein elektronischer Chip angeordnet werden kann, wie beispielsweise ein Transponder zur Identifikation der Werkzeugaufnahme durch ein Lesegerät der Werkzeugmaschine. Derartige Aufnahmemulden werden auch als Einbauraum bezeichnet und sind beispielsweise in der technischen Norm DIN 69873 technisch genormt, wie vorstehend bereits erwähnt wurde.

Die erfindungsgemäße Werkzeugaufnahme zeichnet sich nun dadurch aus, dass die Seitenwand der Aufnahmemulde für den elektronischen Chip erste Formschlusselemente aufweist, um den elektronischen Chip formschlüssig in der Aufnahmemulde der Werkzeugaufnahme zu verankern. Bisher wurde der Chip nämlich lediglich durch eine Klebeverbindung in der Aufnahmemulde (Einbauraum) der Werkzeugaufnahme verankert, wobei der Klebstoff an den glatten Seitenwänden des Chips einerseits und der Aufnahmemulde andererseits haftete. Allerdings war diese Haftung aufgrund der glatten Seitenwände des Chips bzw. der Aufnahmemulde nicht hinreichend belastbar, was im Extremfall bei hohen Drehzahlen der Werkzeugaufnahme zu einem Herausschleudern des Chips führen konnte. Das erfindungsgemäß vorgesehene erste Formschlusselement in der Seitenwand der Aufnahmemulde ermöglicht nun eine formschlüssige Verbindung, da der ausgehärtete Klebstoff mit dem ersten Formschlusselement in der Seitenwand der Aufnahmemulde eine formschlüssige Verbindung bildet. Dadurch kann die Drehzahlfestigkeit der Werkzeugaufnahme mit dem eingebauten Chip erhöht werden.

Die formschlüssige Verbindung zwischen dem Chip und der Aufnahmemulde der Werkzeugaufnahme erfolgt also bei der Erfindung nicht durch eine separate Aufnahmehülse, wie sie bei der technischen Lösung gemäß DE 10 2016 102 692 A1 vorgesehen ist, sondern durch den ausgehärteten Klebstoff selbst. Der ausgehärtete Klebstoff weist also bei der Erfindung Vorsprünge auf, die im ausgehärteten Zustand einerseits in die ersten Formschlusselemente (z.B. Ringnuten) in der Seitenwand der Aufnahmemulde und andererseits in zweite Formschlusselemente (z.B. Ringnuten) in der Seitenwand des Chips eingreifen. Der ausgehärtete Klebstoff ersetzt also bei der Erfindung quasi die Aufnahmehülse, wie sie bei der technischen Lösung gemäß DE 10 2016 102 692 A1 vorgesehen ist. Damit bildet der ausgehärtete Klebstoff zwischen der Aufnahmemulde und dem Chip eine Verbindung, die sowohl stoffschlüssig als auch formschlüssig ist.

Beispielsweise kann der Klebstoff Epoxidharz enthalten, jedoch sind im Rahmen der Erfindung auch andere Klebstofftypen einsetzbar.

Gemäß der Erfindung ist nicht nur die Aufnahmemulde (Einbauraum) der Werkzeugaufnahme entsprechend angepasst, sondern auch der elektronische Chip selbst. Hierzu weist der elektronische Chip in seiner Seitenwand zweite Formschlusselemente auf, um den elektronischen Chip formschlüssig in der Aufnahmemulde der Werkzeugaufnahme zu verankern.

Gemäß der Erfindung bildet der ausgehärtete Klebstoff also eine formschlüssige Verbindung mit dem ersten Formschlusselement in der Seitenwand der Aufnahmemulde und auch mit dem zweiten Formschlusselement in der Seitenwand des Chips, was eine belastbare Verankerung des Chips in der Aufnahmemulde der Werkzeugaufnahme ermöglicht.

Hinsichtlich der konstruktiven Gestaltung des ersten bzw. zweiten Formschlusselement bestehen im Rahmen der Erfindung verschiedene Möglichkeiten. Beispielsweise können die Formschlusselemente durch eine Vertiefung gebildet werden. Vorzugsweise ist hierbei in der Seitenwand des Chips und in der Seitenwand der Aufnahmemulde jeweils derselbe Typ eines Formschlusselements angeordnet, sodass beispielsweise gegenüberliegende Vertiefungen in dem Chip einerseits und in der Aufnahmemulde andererseits vorgesehen sind.

In einem bevorzugten Ausführungsbeispiel der Erfindung weist die Vertiefung einen Querschnitt auf, der im Wesentlichen rechteckig ist. Es besteht jedoch alternativ auch die Möglichkeit, dass die Vertiefung einen dreieckigen Querschnitt aufweist. Allgemein zu erwähnen, dass die Erfindung hinsichtlich des Querschnitts der Vertiefung nicht auf die vorstehend erwähnten Beispiele (dreieckig, viereckig) beschränkt ist, sondern auch mit anderen Querschnittsformen realisierbar ist.

Allerdings ist zu erwähnen, dass sich die Vertiefung vorzugsweise von einer rauen Oberfläche unterscheidet und eine wesentlich größere Tiefe aufweist. So beträgt die Tiefe der Vertiefung vorzugsweise mindestens 0,2 mm, 0,5 mm, 1 mm, 2 mm oder 5 mm, um einen ausreichend belastbaren Formschluss zu ermöglichen.

In einem bevorzugten Ausführungsbeispiel der Erfindung sind das erste bzw. zweite Formschlusselement über den Umfang der Aufnahmemulde umlaufend angeordnet. Beispielsweise kann das einzelne Formschlusselement hierbei als Ringnut ausgebildet sein, die über den Umfang der Aufnahmemulde bzw. des Chips umläuft. Hierbei ist zu erwähnen, dass die Erfindung nicht nur Schutz beansprucht für umlaufende Formschlusselemente, die über den gesamten Umfang der Aufnahmemulde bzw. des Chips umlaufen. Es ist vielmehr auch möglich, dass das jeweilige Formschlusselement nur über einen Teil des Umfangs umläuft bzw. Unterbrechungen aufweist.

In dem bevorzugten Ausführungsbeispiel der Erfindung sind in der Seitenwand der Aufnahmemulde mehrere Ringnuten angeordnet, die jeweils eines der ersten Formschlusselemente bilden und vorzugsweise parallel zueinander verlaufen. Entsprechend sind dann vorzugsweise auch in der Seitenwand des Chips mehrere Ringnuten angeordnet, die jeweils eines der zweiten Formschlusselemente bilden und vorzugsweise ebenfalls parallel zueinander verlaufen. Die Ringnuten in der Seitenwand der Aufnahmemulde einerseits und in der Seitenwand des Chips andererseits liegen vorzugsweise in Deckung nebeneinander, damit der ausgehärtete Klebstoff eine stabile und belastbare Formschlussverbindung bilden kann.

In einem anderen Ausführungsbeispiel der Erfindung sind dagegen in der Seitenwand der Aufnahmemulde bzw. in der Seitenwand des Chips über den Umfang verteilt mehrere Formschlusselemente angeordnet, die voneinander getrennt sind, wobei die Formschlusselemente über den Umfang verteilt vorzugsweise äquidistant angeordnet sind. Auch hierbei liegen die Formschlusselemente in der Seitenwand der Aufnahmemulde einerseits und in der Seitenwand des Chips andererseits vorzugsweise in Deckung zueinander, um eine belastbare Formschlussverbindung durch den ausgehärteten Klebstoff zu ermöglichen.

Die Erfindung ermöglicht vorteilhaft eine hohe Drehzahlfestigkeit der Werkzeugaufnahme ohne die Gefahr eines Herausschleuderns des Chips aus der Aufnahmemulde der Werkzeugaufnahme. So kann die Drehzahlfestigkeit beispielsweise Werte von mindestens 10.000 UpM, 25.000 UpM, 50.000 UpM, 100.000 UpM oder sogar 200.000 UpM erreichen (UpM: Umdrehung pro Minute).

Es wurde bereits vorstehend erwähnt, dass die Aufnahmemulde in der Werkzeugaufnahme beispielsweise gemäß der technischen Norm DIN 69873 ausgebildet sein kann. Die Aufnahmemulde (Einbauraum) kann also eine Radialbohrung sein, die bezüglich der Drehrichtung der Werkzeugaufnahme radialverläuft.

In dem bevorzugten Ausführungsbeispiel der Erfindung handelt sich bei dem elektronischen Chip um einen RFID-Transponder (RFID: Radio Frequency Identification). Die Erfindung ist jedoch hinsichtlich des Typs des elektronischen Chips nicht auf derartige RFID-Transponder beschränkt, sondern grundsätzlich auch mit anderen Typen von elektronischen Chips realisierbar.

Ferner ist zu erwähnen, dass der im Rahmen der Erfindung verwendete Begriff eines Chips nicht auf elektronische Datenträger beschränkt ist, die eine elektronische Schaltung enthalten. Beispielsweise kann der Chip auch ein einfaches Kunststoffteil sein, das beispielsweise einen QR-Code trägt.

Weiterhin ist zu erwähnen, dass die Werkzeugaufnahme zusätzlich zu der Montageschnittstelle (z.B. Spindelschnittstelle) und dem Spannfutter vorzugsweise einen Mittelabschnitt aufweist, der sich zwischen der Montageschnittstelle und dem Spannfutter befindet. Die Aufnahmemulde für den elektronischen Chip befindet sich dann vorzugsweise in diesem Mittelabschnitt.

Ferner ist zu erwähnen, dass die Erfindung nicht nur Schutz beansprucht für die vorstehend beschriebene erfindungsgemäße Werkzeugaufnahme. Vielmehr beansprucht die Erfindung auch Schutz für eine Werkzeugmaschine (z. B. Fräsmaschine) mit einer solchen Werkzeugaufnahme.

Andere vorteilhafte Weiterbildungen der Erfindung sind in den Unteransprüchen gekennzeichnet oder werden nachstehend zusammen mit der Beschreibung der bevorzugten Ausführungsbeispiele der Erfindung anhand der Figuren näher erläutert. Es zeigen:
- Figur 1: eine Querschnittsansicht einer erfindungsgemäßen Werkzeugaufnahme mit einer Aufnahmemulde für einen elektronischen Chip,
- Figur 2: eine Längsschnittansicht der Werkzeugaufnahme aus Figur 1,
- Figur 3A: eine Schnittansicht durch die Aufnahmemulde bei einem ersten Ausführungsbeispiel,
- Figur 3B: eine Schnittansicht eines erfindungsgemäß angepassten elektronischen Chips zur Montage in der Aufnahmemulde gemäß Figur 3A,
- Figur 3C: eine Schnittansicht durch die Aufnahmemulde gemäß Figur 3A mit dem Chip gemäß Figur 3B und einer Klebstoffverbindung,
- Figur 3D: eine Detailansicht der Klebstoffverbindung aus Figur 3C,
- Figuren 4A-4D: Abwandlungen des Ausführungsbeispiels gemäß den Figuren 3A-3D mit einer dreieckigen Querschnittsform der Ringnuten in der Aufnahmemulde.

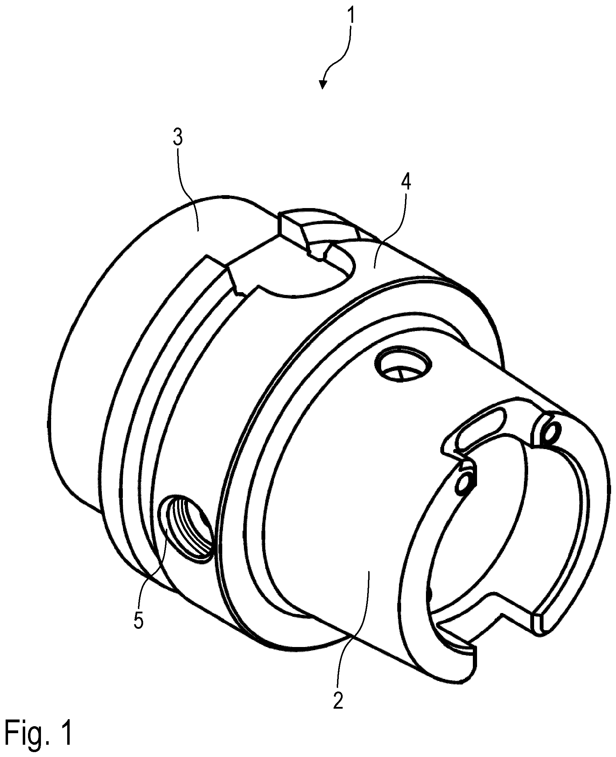

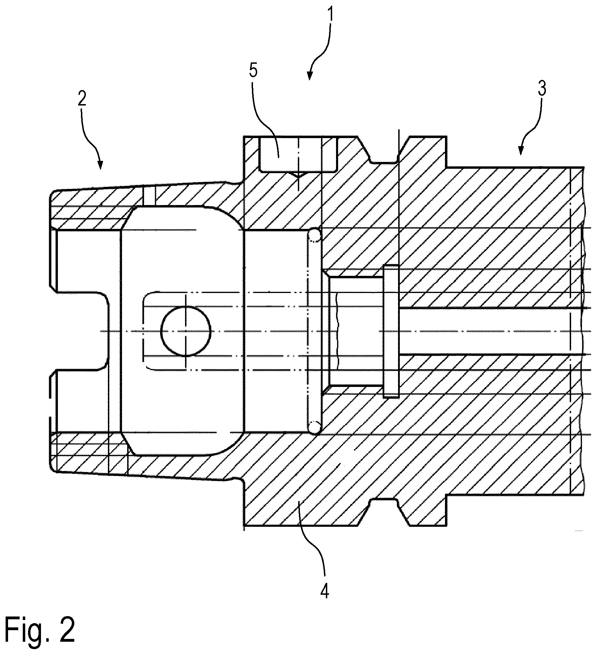

Die Figuren 1 und 2 zeigen eine erfindungsgemäße Werkzeugaufnahme 1, die der technischen Norm DIN 69893 entspricht und im Wesentlichen aus einem Hohlschaftkegel 2, einem Schrumpffutter 3 und einem Mittelabschnitt 4 besteht.

Der Hohlschaftkegel 2 dient zur lösbaren Montage der Werkzeugaufnahme 1 in einer Werkzeugmaschine (Z. B. Fräsmaschine).

Das Schrumpffutter 3 dient dagegen zur Aufnahme eines Werkzeugs (z. B. Fräser), was an sich aus dem Stand der Technik bekannt ist.

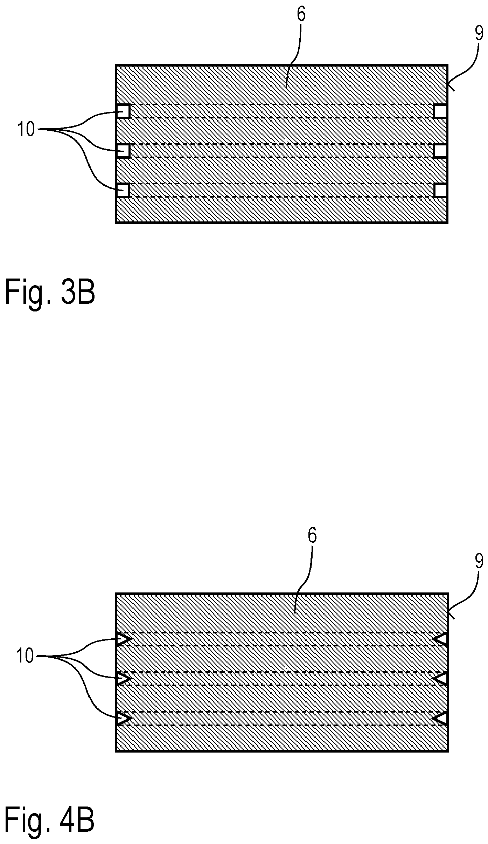

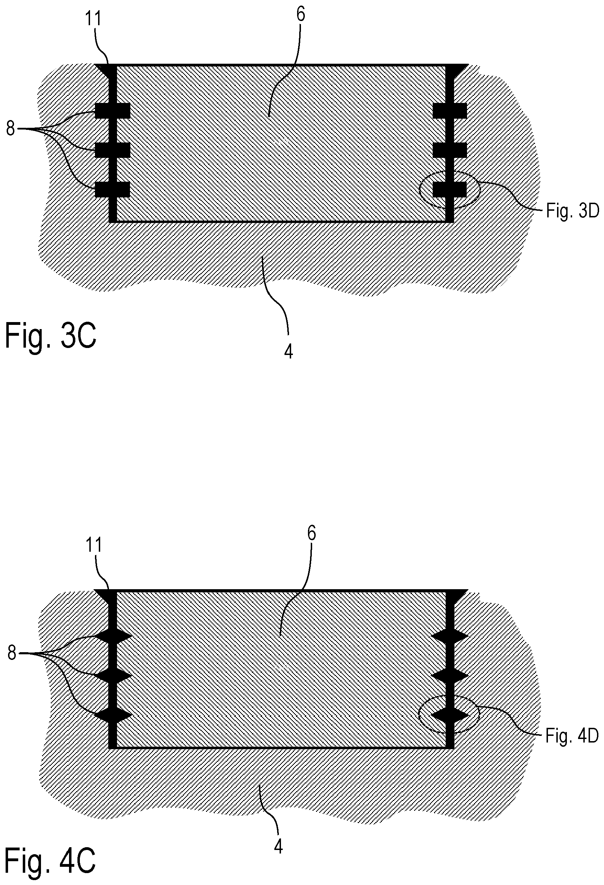

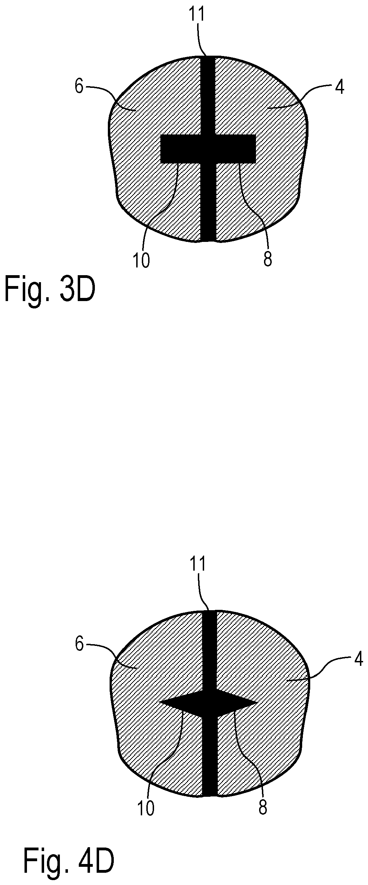

In dem Mittelabschnitt 4 der Werkzeugaufnahme 1 befindet sich in der Mantelfläche eine Aufnahmemulde 5 für einen elektronischen Chip 6 (z. B. RFID-Transponder), wobei die Aufnahmemulde 5 weitgehend der technischen Norm DIN 69873 entspricht. Der Chip 6 ist hierbei in den Figuren 1 und 2 nicht dargestellt, sondern nur in den Figuren 3B-3D und 4B-4D.

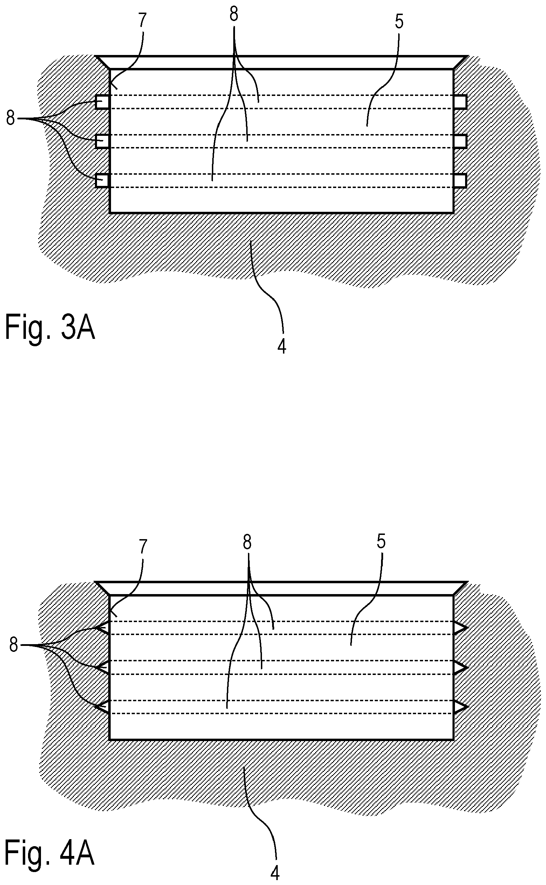

Die Figuren 3A-3D einerseits und die Figuren 4A-4D die andererseits zeigen zwei verschiedene Ausführungsbeispiele. Im Folgenden wird deshalb zunächst das Ausführungsbeispiel gemäß den Figuren 3A-3D beschrieben.

So weist die Aufnahmemulde 5 hierbei in ihrer Seitenwand 7 ringförmig umlaufende Ringnuten 8 auf, die jeweils einen rechteckigen Querschnitt haben.

Entsprechend weist auch der Chip 6 in seiner Seitenwand 9 ringförmig umlaufende Ringnuten 10 auf, wobei die Ringnuten 10 in der Seitenwand 9 des Chips 6 ebenfalls einen rechteckigen Querschnitt haben.

Die Ringnuten 8 in der Seitenwand 7 der Aufnahmemulde 1 liegen hierbei in Deckung mit den Ringnuten 10 in der Seitenwand 9 des Chips 6, wie aus Figur 3C ersichtlich ist.

Aus Figur 3C ist weiterhin eine Klebstoffverbindung 11 ersichtlich, die den Chip 6 formschlüssig in der Aufnahmemulde 5 der Werkzeugaufnahme 1 verankert. So ragt der Klebstoff der Klebstoffverbindung 11 im ausgehärteten Zustand in die Ringnuten 8 einerseits und in die Ringnuten 10 andererseits hinein, wodurch der Chip 6 in der Aufnahmemulde 5 formschlüssig verankert wird. Die Klebstoffverbindung 11 ermöglicht also aufgrund der Ringnuten 8, 10 eine wesentlich höhere Drehzahlfestigkeit der Werkzeugaufnahme 1 als bei glatten Seitenwänden 7, 9.

Das Ausführungsbeispiel gemäß den Figuren 4A-4D stimmt weitgehend mit dem vorstehend beschriebenen Ausführungsbeispiel gemäß den Figuren 3A-3D überein, sodass zur Vermeidung von Wiederholungen auf die vorstehende Beschreibung verwiesen wird, wobei für entsprechende Einzelheiten dieselben Bezugszeichen verwendet werden.

Eine Besonderheit dieses Ausführungsbeispiels besteht darin, dass die Ringnuten 8,10 jeweils einen dreieckigen Querschnitt haben.

### Bezugszeichenliste:

- 1: Werkzeugaufnahme
- 2: Hohlschaftkegel
- 3: Schrumpffutter
- 4: Mittelabschnitt der Werkzeugaufnahme
- 5: Aufnahmemulde der Werkzeugaufnahme
- 6: Chip
- 7: Seitenwand der Aufnahmemulde
- 8: Ringnuten in der Seitenwand der Aufnahmemulde
- 9: Seitenwand des Chips
- 10: Ringnuten in der Seitenwand des Chips
- 11: Klebstoffverbindung

## Patentansprüche

1. Werkzeugaufnahme (1) zur Montage eines Werkzeugs, mit
a) einem Spannfutter (3) zum Einspannen des Werkzeugs in dem Spannfutter (3),
b) einer Montageschnittstelle (2) zur lösbaren Montage der Werkzeugaufnahme (1) an der Werkzeugmaschine,
c) einer radial von außen zugänglichen Aufnahmemulde (5) in der Mantelfläche der Werkzeugaufnahme (1), und
d) einem Chip (6), der in der Aufnahmemulde (5) angeordnet ist,
**dadurch gekennzeichnet,**
e) **dass** die Seitenwand (7) der Aufnahmemulde (5) mindestens ein erstes Formschlusselement (8) aufweist, um den Chip (6) formschlüssig in der Aufnahmemulde (5) der Werkzeugaufnahme (1) zu verankern,
f) **dass** der Chip (6) in seiner Seitenwand (9) mindestens ein zweites Formschlusselement (10) aufweist, um den Chip (6) formschlüssig in der Aufnahmemulde (5) der Werkzeugaufnahme (1) zu verankern,
g) **dass** der Chip (6) in der Aufnahmemulde (5) durch einen Klebstoff (11) fixiert ist,
h) **dass** der ausgehärtete Klebstoff (11) mit dem ersten Formschlusselement (8) in der Seitenwand (7) der Aufnahmemulde (5) und mit dem zweiten Formschlusselement (10) an dem Chip (6) einen Formschluss bildet und den Chip (6) dadurch formschlüssig in der Aufnahmemulde (5) fixiert,
i) **dass** der Klebstoff (11) im ausgehärteten Zustand mindestens einen ersten Vorsprung aufweist, der im ausgehärteten Zustand formschlüssig in das erste Formschlusselement (8) in der Seitenwand (7) der Aufnahmemulde (5) eingreift und dadurch die formschlüssige Verbindung zwischen dem Chip (6) und der Aufnahmemulde (5) herstellt, und
j) **dass** der Klebstoff (11) im ausgehärteten Zustand mindestens einen zweiten Vorsprung aufweist, der im ausgehärteten Zustand formschlüssig in das zweite Formschlusselement (10) in der Seitenwand des Chips (6) eingreift und dadurch die formschlüssige Verbindung zwischen dem Chip (6) und der Aufnahmemulde (5) herstellt.

2. Werkzeugaufnahme (1) nach Anspruch 1, wobei der Klebstoff (11) den Chip (6) sowohl stoffschlüssig als auch formschlüssig in der Aufnahmemulde (5) der Werkzeugaufnahme (1) fixiert.

3. Werkzeugaufnahme (1) nach einem der vorhergehenden Ansprüche,
wobei
a) das erste Formschlusselement (8) in der Seitenwand der Aufnahmemulde (5) und/oder das zweite Formschlusselement (10) an dem Chip (6) eine Vertiefung (8, 10) ist,
b) die Vertiefung (8, 10) einen Querschnitt aufweist, der rechteckig oder dreieckig ist, und
c) die Vertiefung (8, 10) eine Tiefe von mindestens 1mm, 2mm oder 5mm aufweist.

4. Werkzeugaufnahme (1) nach einem der vorhergehenden Ansprüche, wobei das erste Formschlusselement (8) in der Seitenwand (7) der Aufnahmemulde (5) und/oder das zweite Formschlusselement (10) an dem Chip (6) über den Umfang der Aufnahmemulde (5) umläuft, und zwar über den gesamten Umfang der Aufnahmemulde (5) oder zumindest über einen Teil des Umfangs der Aufnahmemulde (5).

5. Werkzeugaufnahme (1) nach einem der vorhergehenden Ansprüche,
wobei
a) in der Seitenwand (7) der Aufnahmemulde (5) mehrere Ringnuten (8) angeordnet sind, die jeweils eines der ersten Formschlusselemente (8) bilden und parallel zueinander verlaufen, und/oder
b) in der Seitenwand des Chips (6) mehrere Ringnuten (10) angeordnet sind, die jeweils eines der zweiten Formschlusselemente (10) bilden und parallel zueinander verlaufen.

6. Werkzeugaufnahme (1) nach einem der vorhergehenden Ansprüche,
wobei
a) in der Seitenwand (7) der Aufnahmemulde (5) über den Umfang der Aufnahmemulde (5) verteilt mehrere erste Formschlusselemente angeordnet sind und zwar äquidistant, und/oder
b) in der Seitenwand (9) des Chips (6) über den Umfang des Chips (6) verteilt mehrere zweite Formschlusselemente (10) angeordnet sind und zwar äquidistant.

7. Werkzeugaufnahme (1) nach einem der vorhergehenden Ansprüche,
wobei
a) die Spindelschnittstelle (2) zur Montage der Werkzeugaufnahme (1) in der Werkzeugmaschine einen Hohlschaftkegel (2) aufweist, und/oder
b) das Spannfutter (3) für das Werkzeug ein Schrumpffutter (3) ist, und/oder
c) die Werkzeugaufnahme (1) mit dem eingeklebten elektronischen Chip (6) eine Drehzahlfestigkeit von mindestens 10.000 UpM, 25.000 UpM, 50.000 UpM, 100.000 UpM oder 200.000 UpM, und/oder
d) die Aufnahmemulde (5) für den elektronischen Chip (6) eine Radialbohrung ist, die bezüglich der Drehrichtung der Werkzeugaufnahme (1) radial verläuft, und/oder
e) sich die Aufnahmemulde (5) in der Werkzeugaufnahme (1) in einem Mittelabschnitt (4) zwischen der Montageschnittstelle (2) und dem Spannfutter (3) befindet, und/oder
f) der elektronische Chip (6) einen RFID-Transponder enthält, und/oder
g) die Aufnahmemulde (5) in der Werkzeugaufnahme (1) gemäß der technischen Norrr DIN 69873 ausgebildet ist.

8. Werkzeugmaschine mit einer Werkzeugaufnahme (1) nach einem der vorhergehenden Ansprüche.

## Claims

1. Tool holder (1) for mounting a tool, with
a) a chuck (3) for clamping the tool in the chuck (3),
b) a mounting interface (2) for detachable mounting of the tool holder (1) on the machine tool,
c) a receiving recess (5) in the lateral surface of the tool holder (1) being radially accessible from the outside, and
d) a chip (6) arranged in the receiving recess (5),
**characterized in**
e) **that** the side wall (7) of the receiving recess (5) has at least one first form-fit element (8) in order to anchor the chip (6) form-fittingly in the receiving recess (5) of the tool holder (1),
f) **that** the chip (6) has at least one second form-fit element (10) in its side wall (9) in order to anchor the chip (6) form-fittingly in the receiving recess (5) of the tool holder (1),
g) **that** the chip (6) is fixed in the receiving recess (5) by an adhesive (11),
h) **that** the cured adhesive (11) forms a form-fit with the first form-fit element (8) in the side wall (7) of the receiving recess (5) and with the second form-fit element (10) on the chip (6) and thereby fixes the chip (6) form-fittingly in the receiving recess (5),
i) **that**, in the cured state, the adhesive (11) has at least one first projection which, in the cured state, engages in the first form-fit element (8) in the side wall (7) of the receiving recess (5) with a form-fit and thereby produces the form-fitting connection between the chip (6) and the receiving recess (5), and
j) **that**, in the cured state, the adhesive (11) has at least one second projection which, in the cured state, engages in the second form-fit element (10) in the side wall of the chip (6) with a form-fit and thereby produces the form-fitting connection between the chip (6) and the receiving recess (5).

2. Tool holder (1) according to claim 1, wherein the adhesive (11) fixes the chip (6) in the receiving recess (5) of the tool holder (1) both with a material bond and with a form fit.

3. Tool holder (1) according to one of the preceding claims, wherein
a) the first form-fit element (8) in the side wall of the receiving recess (5) and/or the second form-fit element (10) on the chip (6) is a recess (8, 10),
b) the recess (8, 10) has a cross section which is rectangular or triangular, and
c) the recess (8, 10) has a depth of at least 1mm, 2mm or 5mm.

4. Tool holder (1) according to one of the preceding claims, wherein the first form-fit element (8) in the side wall (7) of the holding recess (5) and/or the second form-fit element (10) on the chip (6) runs around the circumference of the holding recess (5), namely over the entire circumference of the holding recess (5) or at least over part of the circumference of the holding recess (5).

5. Tool holder (1) according to one of the preceding claims, wherein
a) a plurality of annular grooves (8) are arranged in the side wall (7) of the receiving recess (5), which annular grooves (8) each form one of the first form-fit elements (8) and run parallel to one another, and/or
b) a plurality of annular grooves (10), which each form one of the second form-fit elements (10) and run parallel to one another, are arranged in the side wall of the chip (6).

6. Tool holder (1) according to one of the preceding claims, wherein
a) a plurality of first form-fit elements are arranged in the side wall (7) of the receiving recess (5), distributed over the circumference of the receiving recess (5) and equidistantly, and/or
b) a plurality of second form-fit elements are arranged in the side wall (9) of the chip (6), distributed over the circumference of the chip (6) and equidistantly.

7. Tool holder (1) according to one of the preceding claims, wherein
a) the spindle interface (2) for mounting the tool holder (1) in the machine tool has a hollow shank taper (2), and/or
b) the chuck (3) for the tool is a shrink fit chuck (3), and/or
c) the tool holder (1) with the bonded-in electronic chip (6) has a rotational speed of at least 10,000 rpm, 25,000 rpm, 50,000 rpm, 100,000 rpm or 200,000 rpm, and/or
d) the receiving recess (5) for the electronic chip (6) is a radial bore which runs radially with respect to the direction of rotation of the tool holder (1), and/or
e) the receiving recess (5) is located in the tool holder (1) in a central section (4) between the mounting interface (2) and the chuck (3), and/or
f) the electronic chip (6) contains an RFID transponder, and/or
g) the receiving recess (5) in the tool holder (1) is designed in accordance with the technical standard DIN 69873.

8. Machine tool with a tool holder (1) according to one of the preceding claims.

## Revendications

1. Logement d'outil (1) pour le montage d'un outil avec
a) un mandrin de serrage (3) pour le serrage de l'outil dans le mandrin de serrage (3),
b) une interface de montage (2) pour le montage amovible du logement d'outil (1) au niveau de la machine-outil,
c) un creux de réception (5) accessible radialement de l'extérieur dans la surface enveloppe du logement d'outil (1), et
d) une puce (6) qui est agencée dans le creux de réception (5),
**caractérisé en ce que**
e) la paroi latérale (7) du creux de réception (5) présente au moins un premier élément à complémentarité de formes (8) afin d'ancrer la puce (6) par complémentarité de formes dans le creux de réception (5) du logement d'outil (1),
f) la puce (6) dans sa paroi latérale (9) présente au moins un second élément à complémentarité de formes (10) afin d'ancrer la puce (6) par complémentarité de formes dans le creux de réception (5) du logement d'outil (1),
g) la puce (6) est fixée par une colle (11) dans le creux de réception (5),
h) la colle (11) durcie forme avec le premier élément à complémentarité de formes (8) dans la paroi latérale (7) du creux de réception (5) et avec le second élément à complémentarité de formes (10) au niveau de la puce (6) une liaison à complémentarité de formes et fixe la puce (6) ainsi par complémentarité de formes dans le creux de réception (5),
i) la colle (11) présente dans l'état durci au moins une première saillie qui s'engage dans l'état durci par complémentarité de formes dans le premier élément à complémentarité de formes (8) dans la paroi latérale (7) du creux de réception (5) et établit ainsi la liaison à complémentarité de formes entre la puce (6) et le creux de réception (5), et
j) la colle (11) présente dans l'état durci au moins une seconde saillie qui s'engage par complémentarité de formes dans le second élément à complémentarité de formes (10) dans la paroi latérale de la puce (6) et établit ainsi la liaison à complémentarité de formes entre la puce (6) et le creux de réception (5).

2. Logement d'outil (1) selon la revendication 1, dans lequel
la colle (11) fixe la puce (6) non seulement par liaison de matière mais aussi par complémentarité de formes dans le creux de réception (5) du logement d'outil (1).

3. Logement d'outil (1) selon l'une des revendications précédentes, dans lequel
a) le premier élément à complémentarité de forme (8) dans la paroi latérale du creux de réception (5) et/ou le second élément à complémentarité de formes (10) au niveau de la puce (6) est une cavité (8, 10),
b) la cavité (8, 10) présente une section transversale qui est rectangulaire ou triangulaire et
c) la cavité (8, 10) présente une profondeur d'au moins 1 mm, 2 mm ou 5 mm.

4. Logement d'outil (1) selon l'une des revendications précédentes, dans lequel
le premier élément à complémentarité de formes (8) dans la paroi latérale (7) du creux de réception (5) et/ou le second élément à complémentarité de formes (10) au niveau de la puce (6) circule sur la périphérie du creux de réception (5), et ce sur la périphérie entière du creux de réception (5) ou au moins sur une partie de la périphérie du creux de réception (5).

5. Logement d'outil (1) selon l'une des revendications précédentes, dans lequel
a) plusieurs rainures annulaires (8) sont agencées dans la paroi latérale (7) du creux de réception (5), lesquelles forment respectivement un des premiers éléments à complémentarité de formes (8) et s'étendent parallèlement les unes aux autres, et/ou
b) plusieurs rainures annulaires (10) sont agencées dans la paroi latérale de la puce (6), lesquelles forment respectivement un des seconds éléments à complémentarité de formes (10) et s'étendent parallèlement les unes aux autres.

6. Logement d'outil (1) selon l'une des revendications précédentes,
dans lequel
a) dans la paroi latérale (7) du creux de réception (5), plusieurs premiers éléments à complémentarité de formes sont agencés répartis sur la périphérie du creux de réception (5) et ce à équidistance, et/ou
b) dans la paroi latérale (9) de la puce (6), plusieurs seconds éléments à complémentarité de formes (10) sont agencés répartis sur la périphérie de la puce (6) et ce à équidistance.

7. Logement d'outil (1) selon l'une des revendications précédentes,
dans lequel
a) l'interface de broche (2) présente pour le montage du logement d'outil (1) dans la machine-outil un cône à tige creuse (2), et/ou
b) le mandrin de serrage (3) pour l'outil est un mandrin de frettage (3), et/ou
c) le logement d'outil (1) avec la puce (6) électronique collée présente une résistance au couple d'au moins 10 000 UpM, 25 000 UpM, 50 000 UpM, 100 000 UpM ou 200 000 UpM, et/ou
d) le creux de réception (5) pour la puce électronique (6) est un perçage radial qui s'étend radialement par rapport au sens de rotation du logement d'outil (1), et/ou
e) le creux de réception (5) dans le logement d'outil (1) se trouve dans une section médiane (4) entre l'interface de montage (2) et le mandrin de serrage (3), et/ou
f) la puce électronique (6) contient un transpondeur RFID, et/ou
g) le creux de réception (5) est réalisé dans le logement d'outil (1) selon la norme technique DIN 69873.

8. Machine-outil avec un logement d'outil (1) selon l'une des revendications précédentes.
